# FASCICULE DE BREVET EUROPEEN

(11) **EP 1 608 499 B1**
(45) Date de publication et mention de la délivrance du brevet: **12.03.2014**
(21) Numéro de dépôt: 04742396.7
(22) Date de dépôt: 30.03.2004
(51) Int. Cl.: B29C 55/06

(54) **DISPOSITIF D'ETIRAGE LONGITUDINAL DE FILMS**
VORRICHTUNG ZUR LÄNGSRECKUNG VON FOLIEN
LONGITUDINAL FILM DRAWING DEVICE

(30) Priorité: 31.03.2003 FR 0303940
(43) Date de publication de la demande: 28.12.2005
(73) Titulaire: Andritz Biax SAS, 73370 Le Bourget du Lac (FR)
(72) Inventeur: MARCHANTE, MORENO, Innocente, F-73370 Le Bourget du Lac (FR)
(74) Mandataire: Koepe & Partner
(86) Numéro de dépôt international: PCT/FR2004/000795
(87) Numéro de publication internationale: WO 2004/089604

(56) Documents cités:
- AT-B- 305 609
- FR-A- 1 450 585
- GB-A- 1 174 313

## Description

La présente invention concerne un dispositif d'étirage longitudinal de films en matière synthétique.

Les dispositifs d'étirage longitudinal de films, utilisés dans l'industrie, comprennent de façon habituelle, d'amont en aval (par référence au sens de défilement du film à étirer) :
- un ensemble de rouleaux de préchauffage, dont le nombre et le diamètre sont choisis en fonction de la matière constitutive du film à étirer, de l'épaisseur de ce film et de la vitesse de production souhaitée ;
- un groupe d'étirage présentant une succession de cylindres, les premiers cylindres étant entraînés à une vitesse relativement lente et les cylindres suivants étant entraînés à une vitesse plus rapide, de manière à réaliser l'étirage du film entre des cylindres successifs entraînés à des vitesses différentes et croissantes ;
- un groupe de thermostabilisation, dont la fonction est d'assurer la détente thermique et la stabilisation du film, avant l'étirage transversal subséquent de ce film.

Dans les dispositifs d'étirage longitudinal du type précisé ci-dessus, les rouleaux de préchauffage et les cylindres d'étirage, ainsi que les rouleaux du groupe de thermostabilisation, sont maintenus en température, de façon traditionnelle, par une circulation d'huile chaude en provenance d'une chaudière, cette huile chaude étant introduite dans une double enveloppe desdits rouleaux ou cylindres, par des dispositifs du type joint tournant.

D'une façon plus efficace, et mieux adaptée à l'objet de la présente invention, ces cylindres peuvent aussi être régulés en température grâce à la présence, dans la double enveloppe de chaque cylindre, d'un dispositif du type "caloduc", c'est-à-dire d'une chambre fermée étanche au vide et possédant un remplissage partiel en fluide, choisi de telle façon que ses caractéristiques thermodynamiques présentent, dans la gamme des températures de fonctionnement de la machine; une phase vapeur et une phase liquide.

Un apport de chaleur à l'intérieur du cylindre est ici réalisé par une résistance électrique chauffante, par radiation ou par circulation d'air chaud, l'énergie calorifique nécessaire étant ainsi transmise au film au travers de l'enceinte du type "caloduc", par vaporisation plus ou moins complète du liquide qu'elle renferme ; la vapeur produite se condense sur les parties froides du cylindre, pour assurer l'isothermie de celui-ci ainsi qu'un transfert rapide de la chaleur entre le moyen de chauffage et le film.

De tels dispositifs présentent l'avantage d'une économie d'énergie, d'un meilleur coefficient d'échange thermique, d'une meilleure régulation de température, mais également permettent d'éviter les dispositifs tels que les joints tournants qui, outre les problèmes de maintenance qui leur sont inhérents, surtout pour les machines à grande vitesse, présentent l'inconvénient, par leur constitution même, d'un couple de freinage important sur le cylindre. Cet effet de couple de freinage est aggravé par le fait que pour permettre la circulation de l'huile dans les tourillons du cylindre, ceux-ci doivent avoir une dimension suffisamment importante, ce qui entraîne par voie de conséquence la présence de roulements de grandes dimensions présentant eux-mêmes un couple résistant important.

En ce qui concerne la partie principale de la machine, qui est le groupe d'étirage, les dispositifs les plus couramment utilisés sont ceux dits à double étage d'étirage, tels que décrits par exemple dans le brevet allemand DE 19622085 (BRUCKNER) ou dans le brevet européen correspondant EP 0 907 495, ou encore dans le brevet britannique GB 1 174 313. Le double étage d'étirage est rendu nécessaire par la tendance naturelle des films synthétiques, soumis à un étirage longitudinal, à se rétreindre simultanément dans le sens transversal.

Cette tendance au retrait transversal doit absolument être évitée, car le retrait transversal du film, lors de son étirage longitudinal, non seulement perturbe la régularité de l'orientation des chaînes moléculaires (isotropie de la matière), mais encore présente l'inconvénient de conduire à une surépaisseur des bords du film, qui perturbe le profil d'épaisseur du film et augmente de façon considérable le taux de déchets, puisque ces bords, qui serviront ultérieurement de zones de prise par les pinces utilisées pour l'étirage transversal, doivent être découpés et éliminés à la sortie de l'étirage transversal.

De façon à réduire ce phénomène de retrait transversal, l'étirage longitudinal du film se fait de façon préférentielle entre deux cylindres à vitesse différentielle, dont la distance tangentielle est la plus courte possible ; l'adhésion du film sur les cylindres, dont la température est maintenue à une valeur appropriée, empêche dans ces conditions le film de suivre sa tendance naturelle au retrait transversal. Cette disposition bien connue permet l'étirage longitudinal d'un film entre deux cylindres à vitesse différentielle, et elle peut être effectivement utilisée pour de faibles vitesses de production.

Par contre, lorsque la vitesse de production donc d'étirage augmente, ce qui est le cas sur les machines modernes, le fait de maintenir la distance tangentielle entre deux cylindres a comme conséquence d'augmenter sur cette distance courte l'accélération à laquelle est soumis le film (accélération qui dépasse rapidement ce que peut accepter la matière étirée) et conduit donc à une rupture du film. Pour éviter cette rupture, il est possible d'augmenter la distance tangentielle entre les deux cylindres, ce qui se traduit immédiatement par un effet de retrait transversal non souhaité.

Pour pallier cet inconvénient, des dispositifs à double étage d'étirage, tels que déjà évoqués ci-dessus, ont été proposés, l'étirage total étant divisé en deux étages d'étirage successifs, présentant chacun une distance tangentielle entre les cylindres d'étirage la plus faible possible, évitant ainsi le retrait transversal.

En d'autres termes, le taux d'étirage global qui conduirait sur un seul étage d'étirage à une accélération trop importante, est réparti sur deux étages, réduisant de ce fait l'accélération, sans offrir pour autant au film une possibilité de retrait transversal.

C'est la raison pour laquelle les dispositifs dits à double étage d'étirage sont couramment utilisés dans l'industrie. Ils présentent généralement six cylindres en ligne.

La nécessité d'utiliser six cylindres provient du fait que de façon à conserver une distance tangentielle d'étirage faible, il est nécessaire de réduire le diamètre des cylindres d'étirage, ce qui, par voie de conséquence, réduit la surface de contact entre le film et la surface de chaque cylindre. Lorsque cette surface devient insuffisante pour que la friction entre le film et le cylindre soit suffisamment élevée pour empêcher le glissement du film sur les cylindres d'étirage du fait de l'effort d'étirage, il devient nécessaire de prévoir un deuxième cylindre synchrone du précédent, le rôle de ce deuxième cylindre étant de maintenir le film sans glissement, avant ou après l'étirage.

Un problème supplémentaire rencontré lors de l'augmentation de la vitesse de production provient du fait que l'air emprisonné par le film constitue, entre celui-ci et la surface du cylindre, un coussin d'air qui décolle le film de la surface du cylindre, annulant de ce fait sa résistance aux efforts d'étirage. Le film se met alors à "flotter" à la fois dans le sens longitudinal et dans le sens transversal, si bien qu'il présente des irrégularités d'étirage dans le sens longitudinal.

De façon à éviter la constitution de ce coussin d'air, il est nécessaire de prévoir des cylindres presseurs qui, malheureusement dans la configuration actuelle en ligne des cylindres d'étirage, ne peuvent pas être positionnés au point d'entrée de l'air.

Un autre inconvénient des dispositifs à double étage d'étirage, à six cylindres en ligne, réside dans le fait que chaque cylindre d'étirage et aussi chaque cylindre presseur qui l'accompagne est susceptible d'endommager la surface du film, ce qui est de plus en plus désavantageux si l'on considère que les films d'emballage actuellement demandés présentent des surfaces de plus en plus sensibles, à bas seuil de scellage ou avec présence de matière dite barrière, alors que simultanément l'exigence de perfection de la surface du film augmente.

Enfin, il est bien clair que la multiplication des cylindres, qu'il s'agisse des cylindres d'étirage ou des cylindres presseurs, augmente le coût global de ces cylindres et de leurs dispositifs d'entraînement.

Bien évidemment, ces inconvénients sont encore amplifiés, dans le cas d'autres systèmes d'étirage connus qui possèdent des étages d'étirage multiples, impliquant un grand nombre de cylindres (voir par exemple le brevet français 1 450 585 et les brevets autrichiens 305609).

La présente invention vise à éviter tous les inconvénients précédemment exposés, et elle a donc pour but de fournir un dispositif permettant un étirage longitudinal à grande vitesse des films synthétiques, avec deux étages d'étirage, mais en réduisant le plus possible le nombre des cylindres d'étirage et tout en évitant, par une disposition géométrique appropriée des cylindres presseurs, la constitution d'un coussin d'air.

A cet effet, le dispositif d'étirage longitudinal de films objet de l'invention, qui est du genre à double étage d'étirage, avec cylindres d'étirage et éléments presseurs, notamment cylindres presseurs, associés aux cylindres d'étirage, comprend quatre cylindres d'étirage sur lesquels passe successivement le film à étirer, avec un premier cylindre d'étirage en particulier d'axe fixe, un deuxième cylindre d'étirage d'axe décalé vers l'avant et verticalement par rapport à l'axe du premier cylindre d'étirage, un troisième cylindre d'étirage d'axe décalé vers l'avant et verticalement par rapport à l'axe du deuxième cylindre d'étirage, et un quatrième cylindre d'étirage d'axe décalé vers l'avant et verticalement par rapport à l'axe du troisième cylindre d'étirage, le dispositif comprenant aussi des moyens motorisés d'entraînement en rotation d'une partie ou de la totalité des cylindres d'étirage à des vitesses différenciées, de manière à former un premier étage d'étirage entre le deuxième cylindre et le troisième cylindre, et à former un deuxième étage d'étirage entre le troisième cylindre et le quatrième cylindre, l'étirage du film se faisant ainsi de part et d'autre du troisième cylindre, caractérisé en ce que le premier cylindre d'étirage et le deuxième cylindre d'étirage possèdent des axes respectifs fixes, tandis que le troisième cylindre d'étirage possède un axe de position réglable, de manière à régler la distance d'étirage dans le premier étage d'étirage.

Ainsi, l'invention fournit un dispositif d'étirage longitudinal de films qui se caractérise par un ensemble de quatre cylindres d'étirage seulement (et non plus six cylindres comme dans les dispositifs connus), avec un agencement de ces quatre cylindres qui permet un double étirage du film, et qui autorise un positionnement optimal de tous les cylindres presseurs ou autres éléments presseurs, comme précisé ci-après.

Le troisième cylindre d'étirage est avantageusement monté sur un attelage mobile, en particulier articulé sur le bâti du dispositif, des moyens motorisés tels qu'au moins un vérin étant prévus pour commander le déplacement de l'attelage mobile en vue de régler la distance d'étirage dans le premier étage d'étirage.

Dans la mesure où des éléments presseurs, tels que des cylindres presseurs, sont associés au moins au deuxième cylindre d'étirage, au troisième cylindre d'étirage et au quatrième cylindre d'étirage, on prévoit ici avantageusement que l'élément presseur associé au troisième cylindre d'étirage est supporté par l'attelage mobile précité, pour accompagner ce troisième cylindre d'étirage dans ses mouvements de réglage.

Quant au quatrième cylindre d'étirage, celui-ci peut posséder un axe fixe, en particulier situé à même hauteur que l'axe du deuxième cylindre d'étirage.

Dans une variante, le quatrième cylindre d'étirage possède, à l'instar du troisième, un axe de position réglable, par exemple monté sur un autre attelage mobile, de manière à régler aussi la distance d'étirage dans le deuxième étage d'étirage, formé par le troisième cylindre et le quatrième cylindre.

Les moyens motorisés d'entraînement en rotation sont prévus pour entraîner le premier cylindre d'étirage et le deuxième cylindre d'étirage en synchronisme ou en quasi-synchronisme, c'est-à-dire à une vitesse légèrement plus grande pour le deuxième cylindre, pour permettre une meilleure adhésion du film.

Ces moyens motorisés d'entraînement en rotation peuvent entraîner positivement les quatre cylindres d'étirage du dispositif, le troisième cylindre d'étirage étant entraîné à une vitesse supérieure à celle du deuxième cylindre d'étirage et définissant le taux d'étirage dans le premier étage d'étirage, et le quatrième cylindre d'étirage étant entraîné à une vitesse supérieure à celle du troisième cylindre d'étirage et définissant le taux d'étirage dans le deuxième étage d'étirage.

Dans une variante, les moyens motorisés d'entraînement en rotation sont prévus pour entraîner positivement en rotation seulement le premier cylindre d'étirage, le deuxième cylindre d'étirage et le quatrième cylindre d'étirage, tandis que le troisième cylindre d'étirage tourne en étant entraîné par le film, à une vitesse intermédiaire entre celle du deuxième cylindre et celle du troisième cylindre.

Les éléments presseurs peuvent être tous constitués par des cylindres presseurs, appliqués contre les cylindres d'étirage associés aux points de tangence du film ou à proximité de ces points de tangence.

Toutefois, dans une variante applicable notamment dans le cas d'un troisième cylindre d'étirage non entraîné positivement par les moyens motorisés d'entraînement en rotation, il est prévu que l'élément presseur associé à ce troisième cylindre d'étirage est constitué par un système de placage électrostatique de préférence à bande.

Dans l'ensemble, le dispositif d'étirage longitudinal de films, objet de la présente invention, possède les avantages suivants :
Le dispositif permet un double étirage des films, en se contentant de quatre cylindres d'étirage au total (au lieu de six dans les dispositifs actuels), ce qui conduit à une réalisation plus simple, plus compacte et plus économique, tant du point de vue de l'agencement des cylindres eux-mêmes que de leurs moyens d'entraînement en rotation.
La disposition particulière des cylindres d'étirage permet un positionnement optimal des cylindres presseurs; en particulier, le positionnement du cylindre presseur associé au deuxième cylindre d'étirage évite la constitution d'un coussin d'air indésirable. Si le troisième cylindre d'étirage est monté sur un équipage mobile, le montage du cylindre presseur associé sur le même équipage mobile permet à ce cylindre presseur de "suivre" les déplacements du troisième cylindre d'étirage, de sorte que ledit cylindre presseur reste positionné au point idéal, quelle que soit la distance d'étirage choisie pour le premier étage d'étirage.

Un autre avantage du dispositif de l'invention, outre le seul fait qu'il met en jeu un nombre très petit de cylindres, résulte de ce que l'étirage s'effectue de part et d'autre d'un seul et même cylindre intermédiaire, à avoir le troisième cylindre. Ainsi, de façon surprenante, les deux phases d'étirage se font avec une tension de film plus élevée, si bien que la stabilité de la position transversale du film est beaucoup plus importante, le film n'ayant pas tendance à "flotter" de quelques centimètres, alternativement de droite à gauche et de gauche à droite, comme dans les dispositifs d'étirage classiques. La suppression de ce "flottement" est essentielle dans le cas de machines où le film doit, après son étirage longitudinal, être étiré transversalement par un dispositif à pinces serrant le film par ses bords longitudinaux.

Le dispositif objet de l'invention offre une possibilité de réglage simple de la distance d'étirage dans le premier étage d'étirage, et éventuellement aussi dans le deuxième étage d'étirage.

Un avantage supplémentaire de ce dispositif résulte de ce que le réglage de la distance d'étirage se fait non pas par déplacement linéaire, mais par rotation de l'équipage mobile autour d'un axe de pivotement, avec une commande de rotation de l'équipage mobile par des vérins notamment pneumatiques, ce qui permet d'introduire un élément de sécurité important en cas de rupture du film lors de l'étirage à grande vitesse.

En effet, lorsqu'une telle rupture se produit, le film qui est déjà à haute température, a tendance à coller sur les cylindres et à s'enrouler sur ceux-ci en couches successives, ce qui dans les machines traditionnelles à déplacement linéaire peut entraîner très rapidement une rupture des cylindres d'étirage. Au contraire, dans le dispositif objet de l'invention, les vérins pneumatiques peuvent être dimensionnés de manière à relâcher progressivement leur tension, si celle-ci devient excessive du fait de l'enroulement accidentel du film autour d'un cylindre d'étirage, ce qui protège la machine de tout risque de détérioration.

L'invention sera mieux comprise à l'aide de la description qui suit, en référence au dessin schématique annexé représentant, à titre d'exemple, une forme d'exécution de ce dispositif d'étirage longitudinal de films :
La figure 1 représente un dispositif d'étirage longitudinal, conforme à la présente invention, en vue de côté, dans une première position ;
La figure 2 est une vue de côté similaire à figure 1, mais illustrant une seconde position du dispositif d'étirage longitudinal.

Sur le dessin, le dispositif d'étirage longitudinal est désigné dans son ensemble par la référence 2. Ce dispositif d'étirage longitudinal 2 est placé entre un ensemble de rouleaux de préchauffage 3, situé en amont, et un groupe de thermostabilisation 4, situé en aval, les notions d'amont et d'aval étant utilisées par référence au sens de défilement (indiqué par des flèches) du film 5 à étirer.

Le dispositif d'étirage longitudinal 2 comprend lui-même, d'amont en aval, quatre cylindres d'étirage 6, 7, 8 et 9, auxquels sont associés des cylindres presseurs, comme détaillé ci-après.

Le premier cylindre d'étirage 6 est un cylindre d'axe fixe 10, directement monté sur le bâti 11 du dispositif 2. Ce premier cylindre 6 est facultativement équipé d'un cylindre presseur (non représenté), appliqué au point de tangence entre le film 5 et le cylindre 6.

Le deuxième cylindre d'étirage 7 est également un cylindre d'axe fixe 12, directement monté sur le bâti 11 du dispositif 2. L'axe 12 de ce deuxième cylindre 7 est décalé vers l'avant et aussi vers le bas, par rapport à l'axe 10 du premier cylindre 6.

Un cylindre presseur 13 est associé au deuxième cylindre d'étirage 7, en étant positionné de façon à ce que son point de contact corresponde rigoureusement au point de tangence entre le film 5 et le deuxième cylindre d'étirage 7, pour éviter à cet endroit la constitution d'un coussin d'air. Le cylindre presseur 13 est monté sur un support 14 lui-même monté pivotant, autour d'un axe 15, sur le bâti 11. Au moins un vérin 16, monté entre le bâti 11 et le support 14, commande le pivotement de ce support 14, de manière à rapprocher ou éloigner le cylindre presseur 13 du deuxième cylindre d'étirage 7.

Les deux premiers cylindres d'étirage 6 et 7 sont entraînés en rotation, en synchronisme ou en quasi-synchronisme, par des moyens motorisés non représentés, du type moteur individuel ou motoréducteur avec arbre de transmission. On notera qu'une légère différence de vitesse entre les deux cylindres 6 et 7 permet une meilleure adhérence du film 5 sur ces cylindres.

Le troisième cylindre d'étirage 8 a son axe 17 situé en avant et au-dessus de l'axe 12 du deuxième cylindre d'étirage 8. Ce troisième cylindre 9 est monté sur un attelage mobile 18, articulé autour d'un axe 19 sur le bâti 11. Au moins un vérin 20, monté entre le bâti 11 et l'attelage mobile 18, commande le pivotement de cet attelage mobile 18 autour de son axe d'articulation 19, de manière à régler la distance entre l'axe 12 du deuxième cylindre d'étirage 7 et l'axe 17 du troisième cylindre d'étirage 8, donc à régler la distance d'étirage entre les deux cylindres 7 et 8, qui forment ensemble un première étage d'étirage.

Un cylindre presseur 21 est associé au troisième cylindre d'étirage 8. Le cylindre presseur 21 est monté sur un support 22, lui-même monté pivotant, autour d'un axe 23, sur l'attelage mobile 18. Au moins un vérin 24, monté entre l'attelage mobile 18 et le support 22, commande le pivotement de ce support 22, de manière à rapprocher ou éloigner le cylindre presseur 21 du troisième cylindre d'étirage 8.

Ainsi, le cylindre presseur 21 est maintenu au-dessus du troisième cylindre d'étirage 8, exactement sur ou très près du point de tangence du film 5 en provenance du deuxième cylindre d'étirage 7, quelle que soit la position réglée de l'attelage mobile 18, autrement dit quelle que soit la distance d'étirage entre les deux cylindres 7 et 8.

Le troisième cylindre d'étirage 8 est entraîné en rotation, par des moyens motorisés non représentés, à une vitesse supérieure à celle du deuxième cylindre d'étirage 7, et choisie de manière à obtenir le taux d'étirage longitudinal désiré pour le premier étage d'étirage.

Dans l'exemple illustré au dessin, le quatrième cylindre d'étirage 9 est un cylindre d'axe fixe 25, directement monté sur le bâti 11 du dispositif 2. L'axe 25 de ce quatrième cylindre d'étirage 9 est décalé, vers l'avant et aussi vers le bas, par rapport à l'axe 17 du troisième cylindre 8 ; l'axe 25 du quatrième cylindre 9 se situe ici à même hauteur que l'axe 12 du deuxième cylindre 7.

Un cylindre presseur 26 est associé au quatrième cylindre d'étirage 9, en étant positionné de façon à ce que son point de contact corresponde lui aussi exactement au point de tangence entre le film 5 et le quatrième cylindre d'étirage 9. Le cylindre presseur 26 est monté sur un support 27, lui-même monté pivotant, autour d'un axe 28, sur le bâti 11. Au moins un vérin 29, monté entre le bâti 11 et le support 27, commande le pivotement de ce support 27, de manière à rapprocher ou éloigner le cylindre presseur 26 du quatrième cylindre d'étirage 9.

Ce quatrième (et dernier) cylindre d'étirage 9 est entraîné en rotation, par des moyens motorisés non représentés, à une vitesse supérieure à celle du troisième cylindre d'étirage 8, et choisie de manière à obtenir le taux d'étirage longitudinal désiré pour le deuxième étage d'étirage, formé ici par les deux derniers cylindres 8 et 9.

Ainsi, globalement, le dispositif d'étirage longitudinal 2 représenté au dessin comprend un premier étage d'étirage, formé par les deux cylindres 7 et 8, et un deuxième étage d'étirage, formé par les deux cylindres 8 et 9.

Pour l'utilisation de ce dispositif d'étirage longitudinal 2, le film à étirer 5, en provenance de l'ensemble de rouleaux de préchauffage 3, passe au-dessus du premier cylindre d'étirage 6, au-dessous du deuxième cylindre d'étirage 7, au-dessus du troisième cylindre d'étirage 8 et au-dessous du quatrième cylindre d'étirage 9, avant de parvenir au groupe de thermostabilisation 4 (où interviennent d'autres cylindres presseurs 30 et 31, non concernés par la présente invention). L'actionnement des vérins 16, 24 et 29 permet d'écarter les cylindres presseurs 13, 21 et 26 des cylindres d'étirage correspondants 7, 8 et 9, de manière à permettre l'introduction initiale du film 5 dans le dispositif 2.

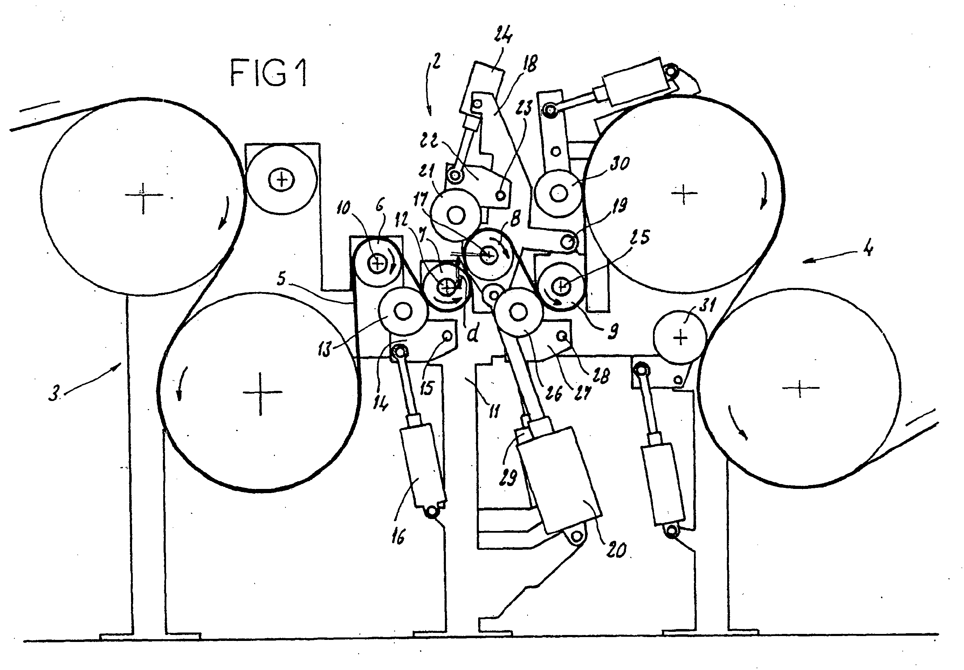

La figure 1 montre le dispositif d'étirage longitudinal 2 dans une position de fonctionnement où l'attelage mobile 18 occupe sa position basse, le vérin 20 ayant sa tige rétractée, ce qui place le troisième cylindre d'étirage 8 dans sa position inférieure, pour laquelle la distance d'étirage (dans le premier étage d'étirage) est minimale, la valeur minimale de cette distance étant indiquée en d.

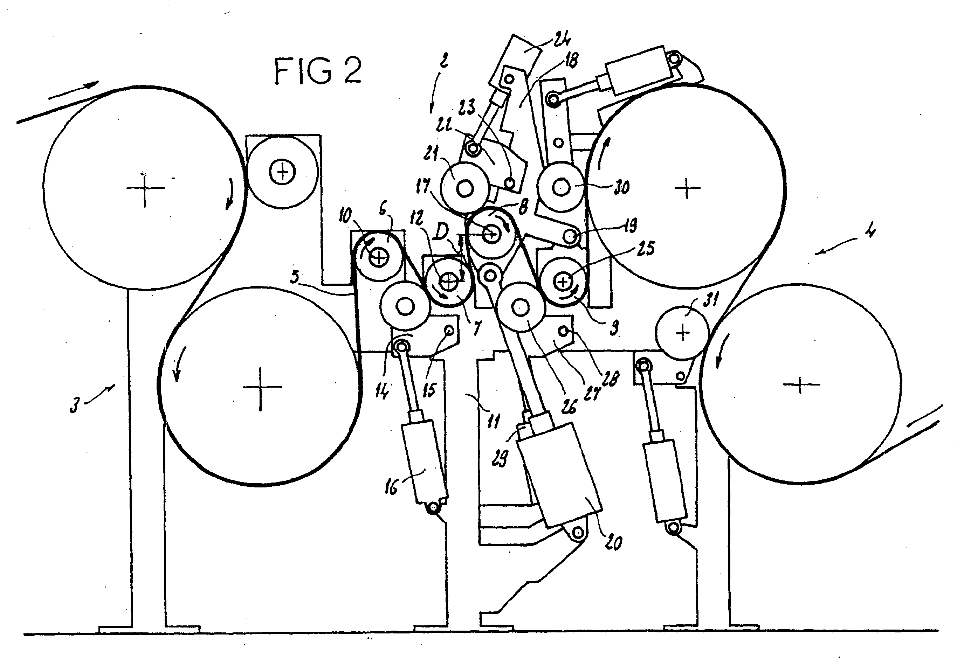

Au contraire, la figure 2 montre le dispositif d'étirage longitudinal 2 dans une position de fonctionnement où l'attelage mobile 18 occupe sa position haute, le vérin 20 ayant sa tige sortie, ce qui place le troisième cylindre d'étirage 8 dans sa position supérieure, pour laquelle la distance d'étirage (dans le premier étage d'étirage) est maximale, la valeur maximale de cette distance étant indiquée en D.

L'on ne s'éloignerait pas du cadre de l'invention, telle que définie dans les revendications annexées :
- En ayant recours à tous moyens équivalents de ceux précédemment décrits, ceci concernant en particulier les moyens de déplacement et positionnement de l'attelage mobile 18 portant le troisième cylindre d'étirage 8, qui peuvent être constitués par un vérin pneumatique ou hydraulique, ou par un vérin électrique à vis, ou par un moteur de positionnement, etc. l'important étant ici de régler la distance entre le deuxième cylindre d'étirage 7 et le troisième cylindre d'étirage 8, donc la distance d'étirage dans le premier étage d'étirage.
- En prévoyant un montage non plus fixe, mais également sur un attelage mobile, du quatrième cylindre d'étirage 9 et du cylindre presseur associé 26, de façon à assurer, là aussi, un réglage de la distance d'étirage dans le deuxième étage d'étirage.
- Au lieu d'entraîner en rotation de façon motorisée tous les quatre cylindres d'étirage 6, 7, 8 et 9, en entraînant de façon motorisée seulement le premier cylindre 6, le deuxième cylindre 7 et le quatrième cylindre 9, auquel cas le troisième cylindre d'étirage 8 tourne en étant entraîné par le film 5 qui passe sur lui, sa vitesse s'adaptant automatiquement à la vitesse du film 5 soumis à l'étirage, et ce troisième cylindre 8 empêchant par sa présence le retrait transversal du film 5. Dans cette variante, l'utilisation de cylindres du type "caloduc", à faire couple résistant, est particulièrement intéressante.
- En particulier dans cette dernière variante, en remplaçant le cylindre presseur 21, associé au troisième cylindre d'étirage 8, par un système de placage électrostatique de préférence à bande, ce qui permet de bloquer le film 5 dans le sens de la largeur sur le cylindre d'étirage. 8 non entraîné, sans exercer sur le cylindre 8 un couple de freinage supplémentaire.

## Revendications

1. Dispositif d'étirage longitudinal de films en matière synthétique, du genre dispositif à double étage d'étirage, avec cylindres d'étirage et éléments presseurs, notamment cylindres presseurs, associés aux cylindres d'étirage, comprenant quatre cylindres d'étirage (6, 7, 8, 9) sur lesquels passe successivement le film (5) à étirer, avec un premier cylindre d'étirage (6) en particulier d'axe fixe (10), un deuxième cylindre d'étirage (7) d'axe (12) décalé vers l'avant et verticalement par rapport à l'axe (10) du premier cylindre d'étirage (6), un troisième cylindre d'étirage (8) d'axe (17) décalé vers l'avant et verticalement par rapport à l'axe (10) du deuxième cylindre d'étirage (7), et un quatrième cylindre d'étirage (9) d'axe (25) décalé vers l'avant et verticalement par rapport à l'axe (17) du troisième cylindre d'étirage (8), le dispositif (2) comprenant aussi des moyens motorisés d'entraînement en rotation d'une partie ou de la totalité des cylindres d'étirage (6, 7, 8, 9), à des vitesses différenciées, de manière à former un premier étage d'étirage entre le deuxième cylindre (7) et le troisième cylindre (8), et à former un deuxième étage d'étirage entre le troisième cylindre (8) et le quatrième cylindre (9), l'étirage du film (5) se faisant ainsi de part et d'autre du troisième cylindre (8), le premier cylindre d'étirage (6) et le deuxième cylindre d'étirage (7) possèdant des axes respectifs fixes (10, 12), tandis que le troisième cylindre d'étirage (8) possède un axe (17) de position réglable, de manière à régler la distance d'étirage (d, D) dans le premier étage d'étirage, formé entre le deuxième cylindre (7) et le troisième cylindre (8).

2. Dispositif d'étirage longitudinal selon la revendication 1, **caractérisé en ce que** le troisième cylindre d'étirage (8) est monté sur un attelage mobile (18), en particulier articulé (en 19) sur le bâti (11) du dispositif (2), des moyens motorisés tels qu'au moins un vérin (20) étant prévus pour commander le déplacement de attelage mobile (18) en vue de régler la distance d'étirage (d, D) dans le premier étage d'étirage.

3. Dispositif d'étirage longitudinal selon la revendication 2, **caractérisé en ce que** des éléments presseurs, tels que des cylindres presseurs (13, 21, 26), sont associés au moins au deuxième cylindre d'étirage (7), au troisième cylindre d'étirage (8) et au quatrième cylindre d'étirage (9), l'élément presseur (21) associé au troisième cylindre d'étirage (8) étant supporté par l'attelage mobile (18) pour accompagner ce troisième cylindre d'étirage (8) dans ses mouvements de réglage.

4. Dispositif d'étirage longitudinal selon l'une quelconque des revendications 1 à 3, **caractérisé en ce que** le quatrième cylindre d'étirage (9) possède un axe fixe (25), en particulier situé à mme hauteur que l'axe (12) du deuxième cylindre d'étirage (7).

5. Dispositif d'étirage longitudinal selon l'une quelconque des revendications 1 à 3, **caractérisé en ce que** le quatrième cylindre d'étirage (9) possède un axe (25) de position réglable, par exemple monté sur un attelage mobile, de manière à régler la distance d'étirage dans le deuxième étage d'étirage, formé par le troisième cylindre (8) et le quatrième cylindre (9).

6. Dispositif d'étirage longitudinal selon l'une quelconque des revendications 1 à 5, **caractérisé en ce que** les moyens motorisés d'entraînement en rotation sont prévus pour entraîner le premier cylindre d'étirage (6) et le deuxième cylindre d'étirage (7) en synchronisme ou en quasi- synchronisme, c'est-à-dire avec une vitesse légèrement plus grande pour le deuxième cylindre (7).

7. Dispositif d'étirage longitudinal selon la revendication 6, **caractérisé en ce que** les moyens motorisés d'entraînement en rotation sont prévus pour entraîner positivement les quatre cylindres d'étirage (6, 7, 8, 9), le troisième cylindre d'étirage (8) étant entraîné d'une vitesse supérieure à celle du deuxième cylindre (7) et définissant le taux d'étirage dans le premier étage d'étirage, et le quatrième cylindre d'étirage (9) étant entraîné à une vitesse supérieure à celle du troisième cylindre d'étirage (8) et définissant le taux d'étirage dans le deuxième étage d'étirage.

8. Dispositif d'étirage longitudinal selon la revendication 6, **caractérisé en ce que** les moyens motorisés d'entraînement en rotation sont prévus pour entraîner positivement en rotation seulement le premier cylindre d'étirage (6), le deuxième cylindre d'étirage (7) et le quatrième cylindre d'étirage (9), tandis que le troisième cylindre d'étirage (8) tourne en étant entraîné par le film (5), à une vitesse intermédiaire entre celle du deuxième cylindre (7) et celle du quatrième cylindre (9).

9. Dispositif d'étirage longitudinal selon rune quelconque des revendications 1 à 8, **caractérisé en ce que** les éléments presseurs sont tous constitués par des cylindres presseurs (13, 21, 26), appliqués contre les cylindres d'étirage associés (7,8, 9) aux points de tangence du film (5) ou à proximité de ces points de tangence.

10. Dispositif d'étirage longitudinal selon l'une quelconque des revendications 1 à 8, **caractérisé en ce que** l'élément presseur associé au troisième cylindre d'étirage (8) est constitué par un système de placage électrostatique de préférence à bande.

## Patentansprüche

1. Vorrichtung für ein Recken von Folien aus einem synthetischen Material in Längsrichtung, wobei die Vorrichtung vom Typ zum Recken in zwei Stufen ist und Reckwalzen und Druckelemente aufweist, insbesondere Andruckwalzen, die mit den Reckwalzen assoziiert sind, umfassend vier Reckwalzen (6, 7, 8, 9), über die die zu reckende Folie (5) in Aufeinanderfolge läuft, mit einer ersten Reckwalze (6), die insbesondere eine feste Achse (10) aufweist; einer zweiten Reckwalze (7), deren Achse (12) nach vorn und vertikal in Bezug auf die Achse (10) der ersten Reckwalze (6) versetzt ist; einer dritten Reckwalze (8), deren Achse (17) nach vorn und vertikal in Bezug auf die Achse (10) der zweiten Reckwalze (7) versetzt ist; und einer vierten Reckwalze (9), deren Achse (25) nach vorn und vertikal in Bezug auf die Achse (17) der dritten Reckwalze (8) versetzt ist; wobei die Vorrichtung (2) auch mit einem Motor versehene Einrichtungen für einen Antrieb unter Rotation für einen Teil der die Gesamtheit der Reckwalzen (6, 7, 8, 9) mit unterscheidbaren Geschwindigkeiten umfaßt, so daß dadurch eine erste Reckstufe zwischen der zweiten Walze (7) und der dritten Walze (8) gebildet wird und daß dadurch eine zweite Reckstufe zwischen der dritten Walze (8) und der vierten Walze (9) gebildet wird, wobei damit das Recken der Folie (5) auf beiden Seiten der dritten Walze (8) stattfindet; die erste Reckwalze (6) und die zweite Reckwalze (7) jeweilige feste Achsen (10, 12) aufweisen, während die dritte Reckwalze (8) eine Achse (17) mit einstellbarer Stellung aufweist, so daß sie dadurch die Reck-Entfernung (d, D) in der ersten Reckstufe einstellt, die zwischen der zweiten Walze (7) und der dritten Walzen (8) gebildet ist.

2. Längsreck-Vorrichtung nach Anspruch 1, **dadurch gekennzeichnet, daß** die dritte Reckwalze (8) auf einer beweglichen Kupplung (18) montiert ist, die insbesondere an dem Rahmen (11) der Vorrichtung (2) (bei 19) angelenkt ist, Antriebseinrichtungen wie beispielsweise wenigstens ein Zylinder (20), der vorgesehen ist zum Steuern der Verstellung der beweglichen Kupplung (18) im Hinblick auf ein Einstellen der Reck-Entfernung (d, D) in der ersten Reckstufe.

3. Längsreck-Vorrichtung nach Anspruch 2, **dadurch gekennzeichnet, daß** Andrück-Elemente wie beispielsweise Andrück-Walzen (13, 21, 26) verbunden sind wenigstens mit der zweiten Reckwalze (7), mit der dritten Reckwalze (8) und mit der vierten Reckwalze (9), wobei das mit der dritten Reckwalze (8) verbundene Andrück-Element (21) von der beweglichen Kupplung (18) gestützt wird und so diese dritte Reckwalze (8) bei ihren Einstell-Bewegungen begleitet.

4. Längsreck-Vorrichtung nach irgendeinem der Ansprüche 1 bis 3, **dadurch gekennzeichnet, daß** die vierte Reckwalze (9) eine feste Achse (25) aufweist, die insbesondere in derselben Höhe angeordnet ist wie die Achse (12) der zweiten Reckwalze (7).

5. Längsreck-Vorrichtung nach irgendeinem der Ansprüche 1 bis 3, **dadurch gekennzeichnet, daß** die vierte Reckwalze (9) eine Achse (25) mit einstellbarer Position aufweist, die beispielsweise auf einer beweglichen Kupplung montiert ist und damit die Reck-Entfernung in der zweiten Reckstufe einstellt, die von der dritten Walze (8) und der vierten Walze (9) gebildet wird.

6. Längsreck-Vorrichtung nach irgendeinem der Ansprüche 1 bis 5, **dadurch gekennzeichnet, daß** die mit einem Motor versehenen Einrichtungen für den Antrieb unter Rotation ausgelegt sind für ein synchrones oder quasi-synchrones Antreiben der ersten Reckwalze (6) und der zweiten Reckwalze (7), das heißt also mit einer leicht höheren Geschwindigkeit für die zweite Walze (7).

7. Längsreck-Vorrichtung nach Anspruch 6, **dadurch gekennzeichnet, daß** die mit einem Motor versehenen Einrichtungen für den Antrieb unter Rotation ausgelegt sind für ein positives Antreiben der vier Reckwalzen (6, 7, 8, 9), wobei die dritte Reckwalze (8) mit einer Geschwindigkeit angetrieben wird, die höher ist als die der zweiten Reckwalze (7) und die ein Reckverhältnis in der ersten Reckstufe definiert, und die vierte Reckwalze (9) mit einer Geschwindigkeit angetrieben wird, die höher ist als die der dritten Reckwalze (8) und das Reckverhältnis in der zweiten Reckstufe definiert.

8. Längsreck-Vorrichtung nach Anspruch 6, **dadurch gekennzeichnet, daß** die mit einem Motor versehenen Einrichtungen für den Antrieb unter Rotation ausgelegt sind für ein positives Antreiben nur der ersten Reckwalze (6), der zweiten Reckwalze (7) und der vierten Reckwalze (9) unter Rotation, während sich die dritte Reckwalze (8) dadurch dreht, daß sie von der Folie (5) mit einer Geschwindigkeit angetrieben wird, die zwischen derjenigen der zweiten Walze (7) und derjenigen der vierten Walze (9) liegt.

9. Längsreck-Vorrichtung nach irgendeinem der Ansprüche 1 bis 8, **dadurch gekennzeichnet, daß** die Andrück-Elemente alle aus Andrück-Walzen (13, 21, 26) bestehen, die an den damit verbundenen Reckwalzen (7, 8, 9) an den Tangenten-Punkten der Folie (5) oder in der Nähe dieser Tangenten-Punkte angelegt sind.

10. Längsreck-Vorrichtung nach irgendeinem der Ansprüche 1 bis 8, **dadurch gekennzeichnet, daß** das mit der dritten Reckwalze (8) verbundene Andrück-Element gebildet ist aus einem elektrostatischen Anlage-System, vorzugsweise mit einem Band.

## Claims

1. A device for a longitudinal drawing of films of a synthetic material, said device being of the double drawing stage type having drawing cylinders and pressure elements, particularly press cylinders, associated with the drawing cylinders, comprising four drawing cylinders (6, 7, 8, 9) over which the film (5) to be drawn passes in succession, with a first drawing cylinder (6), particularly having a fixed axis (10); a second drawing cylinder (7) the axis (12) of which is offset forward and vertically with respect to the axis (10) of the first drawing cylinder (6); a third drawing cylinder (8) the axis (17) of which is offset forward and vertically with respect to the axis (10) of the second drawing cylinder (7); and a fourth drawing cylinder (9) the axis (25) of which is offset forward and vertically with respect to the axis (17) of the third drawing cylinder (8); the device (2) also comprising motorized rotational driving means for a part or the entirety of the drawing cylinders (6, 7, 8, 9) at distinguishable speeds so as to form a first stage of drawing between the second cylinder (7) and the third cylinder (8) and to form a second drawing stage between the third cylinder (8) and the fourth cylinder (9), the drawing of the film (5) thus occurring on both sides of the third cylinder (8); the first drawing cylinder (6) and the second drawing cylinder (7) have respective fixed axes (10, 12), whereas the third drawing cylinder (8) has an axis (17) of adjustable position so as to adjust the drawing distance (d, D) in the first drawing stage formed between the second cylinder (7) and the third cylinder (8).

2. The longitudinal drawing device according to claim 1, **characterized in that** the third drawing cylinder (8) is mounted on a mobile coupling (18), in particular articulated (at 19) to the frame (11) of the device (2), motorized means such as at least one ram (20) being provided for controlling the displacement of the mobile coupling (18) with a view to adjusting the drawing distance (d, D) in the first drawing stage.

3. The longitudinal drawing device according to claim 2, **characterized in that** pressure elements, such as press cylinders (13, 21, 26), are associated at least with the second drawing cylinder (7), with the third drawing cylinder (8) and with the fourth drawing cylinder (9), the pressure element (21) associated with the third drawing cylinder (8) being supported by the mobile coupling (18) so as to accompany this third drawing cylinder (8) in its adjusting movements.

4. The longitudinal drawing device according to any one of the claims 1 to 3, **characterized in that** the fourth drawing cylinder (9) has a fixed axis (25), particularly situated at the same height as the axis (12) of the second drawing cylinder (7).

5. The longitudinal drawing device according to any one of the claims 1 to 3, **characterized in that** the fourth drawing cylinder (9) has an axis (25) of adjustable position, for example mounted on a mobile coupling, so as to adjust the drawing distance in the second drawing stage formed by the third cylinder (8) and the fourth cylinder (9).

6. The longitudinal drawing device according to any one of the claims 1 to 5, **characterized in that** the motorized rotational driving means are designed for driving the first drawing cylinder (6) and the second drawing cylinder (7) in a synchronism or in a quasi-synchronism, that is to say with a speed slightly higher for the second cylinder (7).

7. The longitudinal drawing device according to claim 6, **characterized in that** the motorized rotational driving means are designed to positively drive the four drawing cylinders (6, 7, 8, 9), the third drawing cylinder (8) being driven at a speed higher than that one of the second cylinder (7) and defining the draw ratio in the first drawing stage, and the fourth drawing cylinder (9) being driven at a speed higher than that one of the third drawing cylinder (8) and defining the draw ratio in the second drawing stage.

8. The longitudinal drawing device according to claim 6, **characterized in that** the motorized rotational driving means are designed to positively drive in rotation only the first drawing cylinder (6), the second drawing cylinder (7) and the fourth drawing cylinder (9), whereas the third drawing cylinder (8) turns by being driven by the film (5) at a speed intermediate between that one of the second cylinder (7) and that one of the fourth cylinder (9).

9. The longitudinal drawing device according to any one of the claims 1 to 8, **characterized in that** the pressure elements all consist of press cylinders (13, 21, 26) applied against the associated drawing cylinders (7, 8, 9) at the tangent points of the film (5) or in proximity to these tangent points.

10. The longitudinal drawing device according to any one of the claims 1 to 8, **characterized in that** the pressure element associated with the third drawing cylinder (8) is formed of an electrostatic clinging system, preferably of the band type.
